# EUROPEAN PATENT SPECIFICATION

(11) **EP 1 186 442 B1**
(45) Date of publication and mention of the grant of the patent: **04.05.2005**
(21) Application number: 01203025.0
(22) Date of filing: 09.08.2001
(51) Int. Cl.: B60B 3/04, B60B 23/12

(54) **A varying-track wheel with a dowel-pin centring system**
Rad für Spurbreitenveränderung mit Zentriervorrichtung mittels Dübeln
Roue pour voie à écartement variable avec système de centrage à chevilles

(30) Priority: 06.09.2000 IT MI000499 U
(43) Date of publication of application: 13.03.2002
(73) Proprietor: TITAN ITALIA S.p.A., 40010 Crespellano (IT)
(72) Inventor: Savignac, Michel, 44042 Cento (Ferrara) (IT)
(74) Representative: Faraggiana, Vittorio, Dr. Ing.

(56) References cited:
- EP-A- 0 664 227
- WO-A-00/12328
- US-A- 4 883 324
- US-A- 5 067 776

## Description

The present invention relates to a varying-track wheel provided with a device for a precise positioning of the rim relative to the disc.

Varying-track wheels, comprising the features of the preamble of claim 1 are already known in the art from WO-A-00/12328, i.e. wheels in which the rim is fastened in a removable manner to the central disc by means of appropriate brackets enabling selection of the distance between the disc plane and the median plane of the rim. These wheels are used on agricultural vehicles such as farm tractors, so that a user can each time vary the vehicle track between a certain number of possible choices (eight for example), depending on requirements.

A problem of known varying-track wheels is to keep a satisfactory radial positioning between the rim and disc when the track is varied. In particular, the continuous increase in the maximum speed of farm tractors makes it increasingly more critical to vary the radial unevenness with respect to the values that are ensured at the factory where mounting of the disc on the rim is carried out by means of special equipment adapted to centre the disc relative to the rim itself.

To avoid the above problem, over a given speed (generally 40 km/h) wheels with a varying track are not used and wheels with a disc welded to the rim are employed, in which clearly the radial unevenness is constant and can be only affected by the fit backlash of the wheel with the vehicle hub.

It is a general aim of the present invention to obviate the above mentioned drawbacks by providing a varying-track wheel equipped with a simple, reliable and precise device for mutual positioning of the rim and disc.

In view of the above aim, in accordance with the invention, a varying-track wheel has been conceived which comprises a rim with fastening elements projecting towards the rotation axis of the wheel and a disc peripherally secured in a removable manner to said fastening elements by means of bolts, characterised in that it comprises at least two devices for a precise mutual positioning of the disc and rim, each of said devices being operatively disposed close to one of said fastening elements and comprising a tubular seat on the fastening element to removably receive one end of a dowel pin the other end of which projects towards the disc to be fitted into a centring hole formed in the periphery of the disc itself.

For better explaining the innovative principles of the present invention and the advantages it offers over the known art, a possible embodiment applying these principles will be described hereinafter with the aid of the accompanying drawings. In the drawings:
- Fig. 1 is a front view of a wheel in accordance with the invention;
- Fig. 2 is a partial view in section taken along line II-II in Fig. 1.

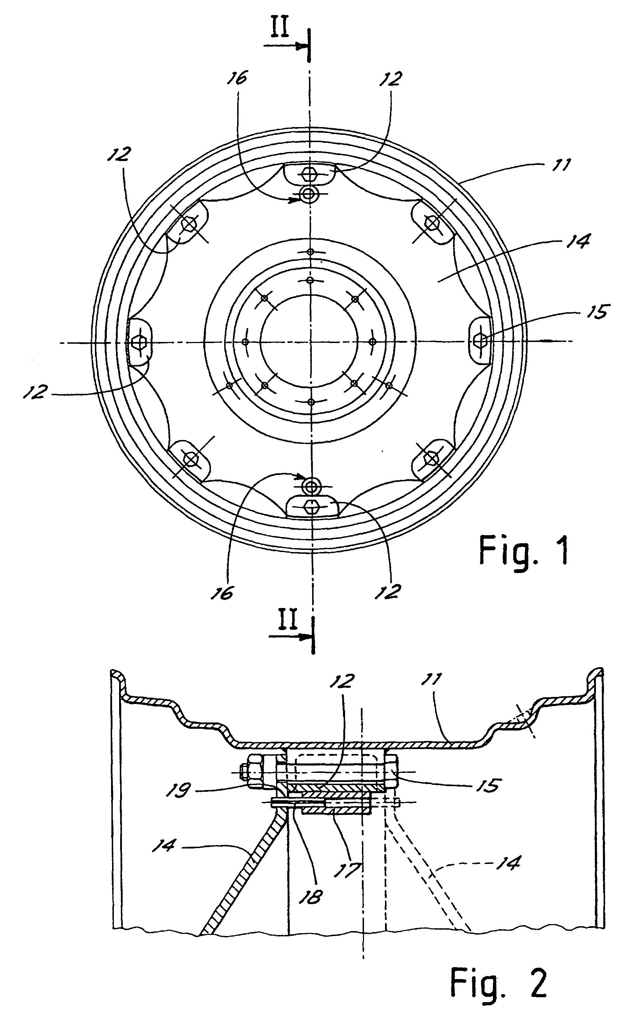

With reference to the drawings, a varying-track wheel made following the principles of the present invention and generally identified by reference numeral 10, is shown in Fig. 1.

Wheel 10 comprises a rim 11 of a substantially known configuration and adapted to externally receive a tyre (not shown). The rim 11 has fastening elements 12 on its inner face, which are spaced apart from each other along the rim circumference and project towards the rotation axis 13 of the wheel for peripheral fastening of a disc 14 in a removable manner, by means of bolts 15.

Close to at least one of the fastening elements 12 the wheel comprises a device 16 for a precise mutual positioning of the disc and rim. As viewed from Fig. 1, advantageously the fastening devices 16 are two in number and are disposed close to opposite fastening elements 12. As can be clearly seen in Fig. 2, each device 16 comprises a tubular seat 17 advantageously made up of a section of tube jig-welded to the fastening element, which removably receives one end of a dowel pin 18 the other end of which projects towards disc 14 to be fitted into a centring hole 19 formed in the periphery of the disc itself. Still advantageously, the tube section welded to the fastening element with its axis parallel to the corresponding bolt 15, has a length that does not exceed the thickness of the fastening element in order not to jut out at the two sides of the latter, as clearly shown in Fig. 2. In this way, the fastening element 12 protects the tube against shocks, and twisting of the tube during use of the wheel is prevented.

The dowel pin 18 is of the elastic type and is fitted in the tube section in such a manner that it can be removed therefrom and inserted therein at both tube ends depending on the side on which the disc is fixed to the rim, as visible in chain line in Fig. 2.

The tubular seat 17 can be painted together with the remaining portion of the wheel whereas the elastic dowel pin is inserted afterwards and can be easily replaced when damaged. The solution involving a removable dowel pin was found to be particularly advantageously exactly because, due to easy substitution of same, it can be readily and quickly replaced when rusted or twisted.

At this point it is apparent that the intended purposes have been achieved by providing a varying-track wheel that, by virtue of a centring device of easy, cheap and reliable construction, was found adapted for use also with relatively high speeds, even higher than 50 km/h.

In use, changing of the track does not require particular equipment or knowledge by the user, since it is sufficient to unbolt the rim from the plate, select the orientation enabling the desired track to be obtained and bolt the rim to the plate again, positioning the dowel pin into the right end of the tube.

Obviously, the above description of an embodiment applying the innovative principles of the present invention is given by way of example only and therefore must not be considered as a limitation of the scope of the invention as herein claimed. For example, the rim and disc shape can vary depending on specific requirements. The fastening elements can also be in the form of a rib or a continuous element along the wheel circumference.

## Claims

1. A varying-track wheel comprising a rim (11) with fastening elements (12) projecting towards the rotation axis of the wheel and a disc (14) peripherally secured in a removable manner to said fastening elements by means of bolts (15), **characterised in that** it comprises at least two devices (16) for a precise mutual positioning of the disc and rim, each of said devices being operatively disposed close to one of said fastening elements (12) and comprising a tubular seat (17) on the fastening element (12) to removably receive one end of a dowel pin (18) the other end of which projects towards the disc to be fitted into a centring hole (19) formed in the periphery of the disc itself.

2. A wheel as claimed in claim 1, **characterised in that** the tubular seat is made up of a section of tube (17) welded to the fastening element (12) with its axis parallel to the corresponding bolt (15), and the length of which does not exceed the thickness of the fastening element so that it does not jut out at the two sides thereof.

3. A wheel as claimed in claim 2, **characterised in that** the dowel pin is of the elastic type fitted in the tube section (17) in such a manner that it can be removed therefrom and inserted therein at both tube ends depending on the side on which the disc is fixed to the rim.

4. A wheel as claimed in claim 1, **characterised in that** the positioning devices (16) are two in number, disposed on opposite fastening elements (12).

## Patentansprüche

1. Ein Rad mit Spurbreitenveränderung umfaßt eine Felge (11) mit Verbindungselementen (12), die in Richtung der Drehachse des Rades hervorstehen, und eine Scheibe (14), die auf eine entfernbare Weise zu den Verbindungselementen mittels Bolzen (15) peripher gesichert ist, **dadurch gekennzeichnet dass** es zumindest zwei Vorrichtungen (16) für eine präzise gegenseitige Positionierung der Scheibe und Felge umfaßt, wobei jede der Vorrichtungen nahe an einer der Verbindungselemente (12) operativ angeordnet ist, und eine röhrenförmige Pfanne (17) an dem Verbindungselement (12) umfaßt, um ein Ende eines Führungsstifts (18) entfernbar aufzunehmen dessen anderes Ende in Richtung der Scheibe hervorsteht um in eine im Umfang der Scheibe ausgebildete Zentrierbohrung (19) eingepasst zu werden.

2. Ein Rad nach Anspruch 1, **dadurch gekennzeichnet dass** die röhrenförmige Pfanne aus einem Rohrstück (17) besteht, angeschweißt an das Verbindungselement (12), mit den Achsen parallel zu dem entsprechenden Bolzen (15) und dessen Länge die Dicke des Verbindungselements nicht überschreitet, so dass es an den beiden Seiten davon nicht herausragt.

3. Ein Rad nach Anspruch 2, **dadurch gekennzeichnet dass** der Führungsstift elastischer Art ist und in dem Rohrstück (17) auf eine Weise angebracht ist, dass er an beiden Rohrenden davon entfernt und darin eingesetzt werden kann, entsprechend der Seite an welcher die Scheibe an der Felge angebracht ist.

4. Ein Rad nach Anspruch 1, **dadurch gekennzeichnet dass** die Positionierungsvorrichtungen (16) zwei an der Zahl sind, angeordnet auf gegenüberliegenden Verbindungselementen (12).

## Revendications

1. Roue pour voie à écartement variable comprenant une jante (11) avec des éléments de fixation (12) faisant saillie vers l'axe de rotation de la roue et un disque (14) fixé de manière périphérique, amovible sur lesdits éléments de fixation au moyen de boulons (15), **caractérisée en ce qu'**elle comprend au moins deux dispositifs (16) pour un positionnement mutuel précis du disque et de la jante, chacun desdits dispositifs étant disposé de manière opérationnelle à proximité de l'un desdits éléments de fixation (12) et comprenant un support tubulaire (17) sur l'élément de fixation (12) pour recevoir de manière amovible une extrémité d'une goupille de positionnement (18), dont l'autre extrémité fait saillie vers le disque pour être introduite dans un trou de centrage (19) formé dans la périphérie du disque lui-même.

2. Roue selon la revendication 1, **caractérisée en ce que** le support tubulaire est réalisé à partir d'une section de tube (17) soudée sur l'élément de fixation (12) avec son axe parallèle au boulon (15) correspondant, et dont la longueur ne dépasse pas l'épaisseur de l'élément de fixation de sorte qu'elle ne fait pas saillie au niveau de ses deux côtés.

3. Roue selon la revendication 2, **caractérisée en ce que** la goupille de positionnement est de type élastique, montée dans la section de tube (17) de sorte qu'elle peut en être retirée et y être insérée au niveau des deux extrémités de tube selon le côté sur lequel le disque est fixé sur la jante.

4. Roue selon la revendication 1, **caractérisée en ce que** les dispositifs de positionnement (16) sont au nombre de deux, disposés sur les éléments de fixation (12) opposés.
